# EUROPÄISCHE PATENTANMELDUNG

(11) **EP 1 130 186 A2**
(43) Veröffentlichungstag der Anmeldung: **05.09.2001**
(21) Anmeldenummer: 01250054.2
(22) Anmeldetag: 19.02.2001
(51) Int. Cl.: E04D 5/14, E04D 5/10

(54) **Verfahren zum Verlegen von Dachdichtungsbahnen**

(30) Priorität: 24.02.2000 DE 10008689
(71) Anmelder: Vedag Dachsysteme GmbH & Co. KG, 60388 Frankfurt (DE)
(72) Erfinder: Carl, Hans-Egon, Dipl.-Ing., 64653 Lorsch (DE); Scherp, Ernst J., Dipl-Ing., 63486 Bruchköbel (DE); Sabau, Petru, 60435 Frankfurt (DE)
(74) Vertreter: Berkenfeld, Helmut, Dipl.-Ing.

(57) **Zusammenfassung**

Es handelt sich um das Aufbringen von mehrschichtigen Dichtungsbahnen unter Erwärmung in einem elektromagnetischen Feld auf eine Unterlage. Die Dichtungsbahn besteht aus einer oberen Deck- und einer unteren Klebeschicht. Weiter enthält sie eine metallische Einlage. Die Bahn muß so weit erwärmt werden, daß die Klebeschicht anschmilzt und anklebt, während die Deckschicht ihren festen Zustand weitgehend beibehält. Dies wird dadurch erreicht, daß die Oberflächentemperatur der Deckschicht beim Aufbringen der Dichtungsbahn mindestens 60° unter dem Fließpunkt der die Deckschicht bildenden Deckmasse gehalten wird.

## Beschreibung

Die Erfindung betrifft ein Verfahren zum Verlegen einer eine obere Deck-, eine untere Klebeschicht und eine metallische Einlage enthaltenden polymermodifizierten Bitumen-Dichtungsbahn, bei welchem die Dichtungsbahn ausgerollt und ausgerichtet und die Klebeschicht anschließend durch ein elektromagnetisches Feld so weit erhitzt wird, daß sie mit dem Randbereich einer benachbarten Dichtungsbahn zu einer dichten Naht und gegebenenfalls mit dem Untergrund mindestens teilweise verklebt wird. Die Erfindung betrifft weiter dafür geeignete Dichtungsbahnen und eine auf diese Weise hergestellte Dachabdichtung.

Ein Verfahren dieser Art ist aus der PCT-Anmeldung WO 93/09310 bekannt. Wegen der bekannten Gefahren durch offene Flammen auf dem Dach beim Verlegen von Schweißbahnen wird hier vorgeschlagen, bituminöse Streifen oder Bahnen zu verwenden, die eine metallische Schicht enthalten. Diese metallischen Schichten werden zum Beispiel induktiv erhitzt und schmelzen das umgebende bituminöse Material. Dabei können die Bahnen miteinander, aber auch mit dem Untergrund verklebt werden. Die metallische Schicht besteht aus Al, Cu, Fe, Messing oder ähnlichem, zum Beispiel in Form einer unperforierten, geprägten Folie. Für das induktive Heizgerät werden Frequenzen von 4 bis 500 kHz bevorzugt. Eine vollflächige Verklebung wird bei überlappend verlegten Bahnen mit einer durchgehend metallischen Einlage, einer unterseitigen, auf Basis-Bitumen oder Polymerbitumen angeordneten Deckschicht erreicht. Die Bahnen entsprechen also bekannten Dampfsperrbahnen, die wegen ihrer Metallfolieneinlage nur schwer zu verlegen sind.

Es wird weiterhin vorgeschlagen, nur schmale Klebestreifen aus beidseitig mit bituminösen Massen beschichteten metallischen Schichten zu verwenden, die unter oder zwischen den Randbereichen zweier üblicher, benachbarter Bahnen angeordnet sind. Auf diese Weise kann eine Nahtverbindung oder gleichzeitig eine streifenweise Befestigung auf dem Untergrund erzielt werden. Aber auch diese Variante hat sich nicht durchsetzen können.

Nach der DE 198 03 045 A1 werden Dichtungsbahnen aus thermoplastischem Material im Überlappungsbereich mechanisch befestigt. Für die Verklebung der Ränder benachbarter Bahnen wird vorgeschlagen, in den Randbereichen metallische Partikel anzuordnen, um die Oberfläche dort durch induktive Erwärmung anzuschmelzen. Selbstverständlich können die Bahnen für eine vollflächige Verklebung auch in voller Breite mit Metallpartikeln durchsetzt sein, oder es werden bei metallfreien Bahnen wieder metallhaltige Klebestreifen verwendet. Die Metallpartikel können pulver-, span-, draht-, streifen-, faden- oder kugelförmig oder ähnlich sein. Damit wird das Problem der schwierigen Handhabbarkeit gelöst. Dennoch hat dieses Verfahren bisher keinen Eingang in die Praxis gefunden. Das mag daran liegen, daß die Druckschrift keinen Hinweis dazu enthält, wie eine zu starke Erwärmung und damit eine Erweichung der Oberfläche der Bahn wirksam vermieden wird. Außerdem enthält keine der beiden Schriften einen Hinweis auf ein geeignetes, fahrbares induktives Heizgerät. Die Angabe eines breiten, bevorzugten Frequenzbereiches ist in diesem Zusammenhang wenig hilfreich, zumal beliebig höhere oder niedrigere Frequenzen geeignet sein können.

In der DE 26 51 756 A1 ist eine Vorrichtung zum Erzeugen eines magnetischen Induktionsfeldes beschrieben, mit dessen Hilfe es möglich ist, insbesondere ausgerollte Teppiche auf Böden und Wänden zu verkleben. Dazu weisen die Teppiche auf ihrer Unterseite einen Schmelzkleber auf, der als Heizarmierung Metall- oder Graphitgebilde enthält. Der Schmelzkleber soll eine Schmelztemperatur zwischen 60 und 120°C haben. Sie soll aber keineswegs so hoch sein, daß das Teppichgewebe beim Aufschmelzen beschädigt würde. Die Vorrichtung besteht aus zwei miteinander verbundenen Teilen, einem Frequenzgenerator und einem Induktor. Der Generator erhöht die Eingangsfrequenz von 50 Hz auf 30 bis 50 kHz.

Der leicht handhabbare Induktor hat eine Induktionsspule mit einer Öffnung von 30 bis 40 cm und einen Gleitschuh, der den Teppich mit einem Druck von 0,067 bis 0,13 bar anpreßt. Die Arbeitsgeschwindigkeit beträgt 1 bis 2 m/min. Die Leistung dieses Gerätes liegt maximal bei 40 m²/min. Für das Verlegen von Dachbahnen befriedigt dies nicht. Außerdem gibt es grundsätzliche Unterschiede zwischen den hier beschriebenen Werkstoffen und bituminösen Stoffen, wie sie üblicherweise beim Herstellen von Dachbahnen verwendet werden. Bei Teppichen kann das Fasermaterial so ausgewählt werden, daß die Schmelztemperatur des Klebers deutlich unter der Temperatur liegt, bei der das Fasermaterial geschädigt würde. Deshalb kann der Teppich auch unmittelbar nach dem Aufschmelzen des Klebers belastet werden. Bituminöse Stoffe hingegen haben keine eigentliche Schmelztemperatur, sondern einen Temperaturbereich, in dem sie mehr oder weniger erweichen. Zwischen Brech- und Fließpunkt liegt die Plastizitätsspanne, in der die bituminösen Stoffe plastisch verformbar sind. Damit die bituminöse Bahn auch noch bei 5°C verlegt werden und zusätzlich sommerliche Dachtemperaturen von 80°C und mehr unbeschadet übersteht, sollte die Plastizitätsspanne etwa zwischen -10°C und 120°C liegen. Beim Verlegen von Schweißbahnen kann das Erreichen des Fließpunktes gut beobachtet und damit eine Überhitzung vermieden werden. Bei einer ausgerollten und ausgerichteten Bahn, die an ihrer Oberfläche induktiv erwärmt wird, ist das nicht möglich.

Von diesem Stand der Technik ausgehend ergibt sich die Aufgabe, ein Verfahren zum Verlegen bituminöser Dichtungsbahnen mit induktiver Erwärmung und eine dafür geeignete Bahn zu entwickeln, bei der einerseits eine gute Verklebung erreicht wird und andererseits ein Erweichen der oberen Deckschicht vermieden wird.

Die Lösung für diese Aufgabe wird in Patentanpruch 1 aufgeführt. Die Patentansprüche 2 bis 4 beschreiben zweckmäßige Weiterentwicklungen. Wenn die Dichtungsbahn wie bekannt soweit erwärmt wird, daß die Klebeschicht anschmilzt und mit dem Randbereich einer benachbarten Bahn und gegebenenfalls mit dem Untergrund verklebt, und erfindungsgemäß gleichzeitig darauf geachtet wird, daß die Oberflächentemperatur der Deckschicht nicht zu weit ansteigt und um mindestens 60° unter ihrem Fließpunkt gehalten wird, wird die vorstehend genannte Aufgabe gelöst. Mit der Erfindung werden damit die obere und untere Grenze der Erwärmung oder der sich einstellenden Temperaturen festgelegt. In einer zweckmäßigen Ausgestaltung wird die Oberflächentemperatur der Deckschicht überwacht. Erfindungsgemäß wird hierzu die Oberflächentemperatur mit Infrarotstrahlung oder durch Verwendung von Temperaturmeßfarben gemessen.

Die erfindungsgemäß verwendete Dichtungsbahn weist wie bekannt eine obere bituminöse Deckschicht, eine Verstärkungseinlage, eine untere bituminöse Klebeschicht und eine metallische Einlage auf. Erfindungsgemäß ist die Nadelpenetration der Masse der unteren Klebeschicht gleich, vorzugsweise aber höher als die der oberen Deckschicht. Ganz vorzugsweise ist die Nadelpenetration der Masse der Klebeschicht mindestens um den Faktor 2 höher als die der oberen Deckschicht. Die Nadelpenetration wird in einer DIN-Norm festgelegt und dient zum Bewerten von Dichtungsbahnen.

Zweckmäßige Ausgestaltungen der erfindungsgemäßen Dichtungsbahn bilden den Gegenstand der Unteransprüche 6 bis 8. Eine erfindungsgemäß hergestellte zweilagige Dachabdichtung wird in Patentanpruch 9 beschrieben.

Am Beispiel der in der Zeichnung gezeigten beiden Ausführungsformen einer Dachabdichtung wird die Erfindung nun weiter beschrieben.

In der Zeichunung ist:
- Fig. 1: eine vereinfachte Seitenansicht einer Dachabdichtung aus zwei sich überlappenden Dichtungsbahnen und
- Fig. 2: eine vereinfachte Seitenansicht einer Dachabdichtung aus zwei sich überlappenden Dichtungsbahnen, zwei darüber versetzt liegenden und gestoßenen Dichtungsbahnen und einer weiteren, die Stoßfuge abdeckenden Dichtungsbahn.

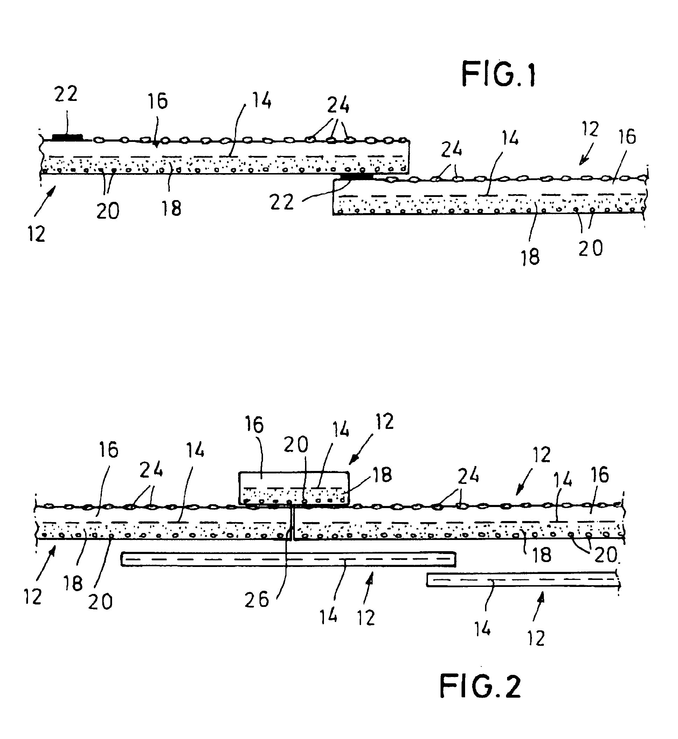

Fig. 1 zeigt zwei sich mit ihren Längsrändern überlappende Dichtungsbahnen 12 mit je einer Verstärkungseinlage 14, einer Deckschicht 16, einer Klebeschicht 18 und einer metallischen Einlage 20. Streifen 22 aus einer Temperaturmeßfarbe sind auf die Dichtungsbahnen 12 aufgelegt. Außerhalb dieser Streifen sind die Oberseiten der Dichtungsbahnen 12 unter Bildung einer Abstreuung 24 abgestreut.

Fig. 2 zeigt zwei untere, sich ebenso mit ihren Längsrändern überlappende Dichtungsbahnen 12 mit Verstärkungseinlagen 14. Im wesentlichen bestehen diese Dichtungsbahnen 12 nur aus Klebeschichten. Die Verstärkungseinlage 14 besteht aus Metall. Die beiden unteren Dichtungsbahnen 12 sind nur 1 bis 2 mm stark. Über diesen unteren Dichtungsbahnen 12 liegen mit einer Versetzung von ungefähr 50 cm zwei mit ihren Stirnseiten 26 aneinander anstoßende Dichtungsbahnen 12. Über der Stoßnaht entlang der Stirnseiten 26 verläuft um 90° versetzt eine weitere Dichtungsbahn 12. Die beiden mittleren Dichtungsbahnen und die obere Dichtungsbahn 12 sind ähnlich wie die Dichtungsbahnen 12 nach Fig. 1 aufgebaut.

Mit der Erfindung wird sichergestellt, daß die Deckschicht auch bei längerem Beibehalten der Klebetemperatur in der unteren Schicht nicht unzulässig erweicht. Dies ist notwendig, da das zeitliche Abklingen der Klebetemperatur von der Temperatur und der Beschaffenheit des Untergrundes abhängt. Wird die Dichtungsbahn zum Beispiel unmittelbar auf einer Wärmedämmschicht verlegt, ist die Wärmeableitung in den Untergrund gering. Bei starker Sonneneinstrahlung können dann in der Deckschicht die für die Verklebung notwendigen Temperaturen nahezu erreicht werden. Die Oberflächentemperatur sollte daher in jedem Fall mindestens 60°K niedriger als die Fließtemperatur der Deckmasse sein. Die Oberflächentemperatur der Deckschicht ist außerdem von der Stärke und der Einwirkzeit des elektromagnetischen Feldes abhängig. Dieses muß daher ständig überprüft werden. Dies kann zum Beispiel durch Messen der Infrarotstrahlung der Bahnoberfläche im Heizbereich erfolgen. Das Meßgerät wirkt auf den Induktor zurück. Ebenso können Temperaturmeßfarben vorzugsweise punkt- oder streifenförmig auf die Oberfläche aufgetragen werden, und sie zeigen das Erreichen der maximal zulässigen Oberflächentemperatur an.

Grundsätzlich können als Frequenzgenerator und Induktor Geräte verwendet werden, die denen der DE 26 51 756 A1 entsprechen. Für die meisten Anwendungen wird ein Induktor bevorzugt, der der Bahnbreite angepaßt und mit einer Anpreßrolle versehen ist.

Als Verstärkungseinlage eignen sich alle üblichen Verstärkungseinlagen, insbesondere Glas- und Polyestervliese. Für die übliche Verlegung mit Überlappungsnaht sind metallische Gebilde nur in der dünneren Klebeschicht angeordnet. Die metallischen Gebilde können in Pulverform gleichmäßig in die Masse eingearbeitet oder als Abstreuung auf die gesamte freie Oberfläche der Klebeschicht oder auf Teilbereiche aufgetragen sein. Faser- oder Drahtgebilde oder ähnliches können auf der Unterseite der Verstärkungseinlage angeordnet und gleich- oder ungleichmäßig über die Bahnbreite verteilt sein.

## Patentansprüche

1. Verfahren zum Verlegen einer eine obere Deck-, eine untere Klebeschicht und eine metallische Einlage enthaltenden polymermodifizierten Bitumen-Dichtungsbahn (12), bei welchem die Dichtungsbahn ausgerollt und ausgerichtet und die Klebeschicht (18) anschließend durch ein elektromagnetisches Feld so weit erhitzt wird, daß sie mit dem Randbereich einer benachbarten Dichtungsbahn zu einer dichten Naht und gegebenenfalls mit dem Untergrund mindestens teilweise verklebt wird, **dadurch gekennzeichnet**, daß die Oberflächentemperatur der Deckschicht (16) um mindestens 60°K unter ihrem Fließpunkt gehalten wird.

2. Verfahren nach Anspruch 1, **dadurch gekennzeichnet**, daß die Oberflächentemperatur der Deckschicht (16) überwacht wird.

3. Verfahren nach Anspruch 2, **dadurch gekennzeichnet**, daß die Oberflächentemperatur durch Messen mit Infrarotstrahlung überwacht wird.

4. Verfahren nach Anspruch 2, **dadurch gekennzeichnet**, daß die Oberflächentemperatur mit Verwendung von Temperaturmeßfarben überwacht wird.

5. Polymermodifizierte Bitumen-Dichtungsbahn zur Verwendung bei dem Verfahren nach Anspruch 1 bis 4 mit einer oberen bituminösen Deckschicht (16), einer Verstärkungseinlage (14), einer unteren bituminösen Klebeschicht (18) und einer metallischen Einlage (20), **dadurch gekennzeichnet**, daß die Nadelpenetration der Masse der unteren Klebeschicht (18) gleich, vorzugsweise aber höher als die der oberen Deckschicht (16) ist.

6. Polymermodifizierte Bitumen-Dichtungsbahn nach Anspruch 5, **dadurch gekennzeichnet**, daß die metallische Einlage (20) in der Klebeschicht (18) eingebettet und diese dünner als die Deckschicht (16) ist.

7. Polymermodifizierte Bitumen-Dichtungsbahn nach Anspruch 5, **dadurch gekennzeichnet**, daß auf der Oberfläche der Deckschicht (16) ein Streifen (22) aus einer Temperaturmeßfarbe angeordnet ist.

8. Dichtungsbahn nach Anspruch 5, **dadurch gekennzeichnet**, daß die Verstärkungseinlage (14) aus metallischen Teilchen oder aus einer Kombination mit organischen oder anorganischen Vliesen, Geweben oder Gelegen besteht.

9. Zweilagige Dachabdichtung als Erzeugnis des Verfahrens nach Anspruch 1 bis 4, **dadurch gekennzeichnet**, daß die untere Lage aus eine metallische Einlage (20) enthaltenden Klebeschichten (18) aus auf beiden Seiten mit Klebemasse beschichteten Verstärkungseinlagen (14) und einer oberen Lage aus versetzt zu der unteren Lage angeordneten Schichten aus auf beiden Seiten mit Deckmasse beschichteten Verstärkungseinlagen (14) besteht, wobei die Nadelpenetration der Masse der Klebeschichten (18) mindestens um den Faktor 2 höher als die der Masse der Deckschichten (16) ist.
